(19) Europäisches Patentamt / European Patent Office / Office européen des brevets

(11) **EP 2 998 344 B1**

(12) **EUROPEAN PATENT SPECIFICATION**

(45) Date of publication and mention
of the grant of the patent:
**29.11.2017 Bulletin 2017/48**

(21) Application number: **14850175.2**

(22) Date of filing: **01.10.2014**

(51) Int Cl.:
*C08J 9/00* *(2006.01)*     *C08L 75/04* *(2006.01)*
*C08G 18/16* *(2006.01)*     *C08J 9/28* *(2006.01)*
*B24B 41/06* *(2012.01)*

(86) International application number:
**PCT/KR2014/009277**

(87) International publication number:
**WO 2015/050382 (09.04.2015 Gazette 2015/14)**

(54) **METHOD FOR PREPARING POLYURETHANE SUPPORT PAD**

VERFAHREN ZUR HERSTELLUNG EINES POLYURETHANSTÜTZKISSENS

PROCÉDÉ DE PRÉPARATION D'UN PATIN DE SUPPORT EN POLYURÉTHANE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2013 KR 20130118684**
               **24.09.2014 KR 20140127710**

(43) Date of publication of application:
**23.03.2016 Bulletin 2016/12**

(73) Proprietor: **LG Chem, Ltd.**
**Seoul 07336 (KR)**

(72) Inventors:
• **SHIN, Dong Mok**
**Daejeon 305-738 (KR)**
• **KIM, Na Ri**
**Daejeon 305-738 (KR)**
• **AHN, Byeong In**
**Daejeon 305-738 (KR)**
• **CHOI, Sang Soon**
**Daejeon 305-738 (KR)**
• **TAE, Young Ji**
**Daejeon 305-738 (KR)**
• **SIN, Chang Hoon**
**Daejeon 305-738 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**KR-A- 20060 094 063**     **KR-A- 20080 031 527**
**KR-A- 20090 038 048**     **KR-A- 20130 037 192**
**KR-B1- 100 828 627**     **US-A1- 2013 018 118**

**Description**

[TECHNICAL FIELD]

The present invention relates to a method of preparing a polyurethane mounting pad, more particularly to a method for easily and rapidly preparing a polyurethane mounting pad that has long and large pores uniformly formed inside, thus exhibiting low hardness, excellent compressibility and high elasticity, and can realize more uniform and high efficiency polishing.

[BACKGROUND OF ART]

Since a substrate used in a semiconductor devices or a display device requiring a high degree of integration requires a fine and precise surface, various planarizing methods are being applied therefor. Particularly, with the tendencies of high integration and high performance of semiconductor devices or display devices, a method of polishing by relatively moving a polishing pad and an object to be polished, while supplying a slurry composition comprising polishing particles and various chemical components between the polishing pad and the object to be polished is generally used. In the polishing method, for more precise polishing, the object to be polished is fixed on a mounting pad so as to maintain a constant location and position during a polishing or processing process.

Particularly, for use as a glass substrate for a display, roughness of the surface of a glass substrate and step difference according to the locations are important management factors, and should be controlled within a range of sub-micron to hundreds of microns. And, the waviness should be managed to 40nm level, and particularly, for application as a glass substrate for TFT, it is required to manage the waviness around 20nm

To enable such precise polishing, in addition to controlling of the conditions of polishing process and apparatus, a mounting pad should have high compressibility and compression recovery rate, and the mounting pad should have more uniform thickness, pressure distribution and tension distribution over the whole area.

However, since previously known mounting pads exhibit non-uniform size and distribution of pores formed inside, and do not have good compressibility and compression recovery rate, they are not sufficient for the application in the field requiring more uniform and precise polishing, for example, for the polishing of a glass substrate for a display.

Accordingly, there is a demand for the development of a method for rapidly and easily preparing a polyurethane mounting pad that includes pores of uniform and regular shape inside, exhibit improved physical properties including compressibility and compression recovery rate and the like, and can realize more uniform and high efficiency polishing.

[DETAILED DESCRIPTION OF THE INVENTION]

[Technical Problem]

It is an object of the present invention to provide a method for easily and rapidly preparing a polyurethane mounting pad that has long and large pores uniformly formed inside, thus exhibiting low hardness, excellent compressibility and the like, and can realize more uniform and high efficiency polishing.

[Technical Solution]

The present invention provides a method for preparing a polyurethane mounting pad comprising the steps of: wet-solidifying a resin composition comprising polyurethane resin and a DMF solvent; and immersing the wet-solidified product in an aqueous solution comprising an acid catalyst or a base catalyst.

Hereinafter, a method for preparing a polyurethane mounting pad and a polyurethane mounting pad according to specific embodiments of the invention will be explained in detail.

As used herein, the term 'mounting pad' refers to a pad that functions for adhering or fixing a carrier to a film to be polished in a polishing process, during a process of preparing a substrate used in a semiconductor or display device.

According to one embodiment of the invention, provided is a method for preparing a polyurethane mounting pad comprising the steps of: wet-solidifying a resin composition comprising polyurethane resin and a DMF solvent; and immersing the wet-solidified product in an aqueous solution comprising an acid catalyst or a base catalyst.

The inventors studied on the preparation of a polyurethane mounting pad, confirmed through experiment that if a polyurethane resin composition is wet-solidified, long oval-shaped pores may be uniformly formed inside, and that by immersing the product in an aqueous solution of a specific temperature comprising an acid catalyst or a base catalyst, the molecular weight of the polyurethane resin may be decreased, thus affording higher compressibility and compression recovery rate and excellent elasticity and mounting performance to the prepared polyurethane mounting pad, and completed the invention.

Particularly, the method according to one embodiment may decrease the weight average molecular weight of the polyurethane resin itself that is included in the finally obtained polyurethane mounting pad within a short time, while maintaining the shape of the pores formed inside of the polyurethane resin during the wet-solidification process, by comprising the specific immersion step.

Namely, in the polyurethane mounting pad provided according to one embodiment, pores of the shape that are difficult to be included in polyurethane resin having equal level of weight average molecular weight, for example, long oval-shaped pores having a large aspect ratio, may be uniformly distributed inside. And, since the polyurethane mounting pad provided according to one embodiment may have lower density and hardness compared to the polyurethane resin obtained by the previously known common method, it may realize higher compressibility and compression recovery rate, and the like.

Thus, since a plurality of long oval-shaped pores are uniformly distributed inside of the polyurethane mounting pad provided according to one embodiment of the invention, air trapped between the mounting pad and a film to be polished may be easily transferred inside, and force applied during the polishing step may be uniformly distributed over the whole mounting pad and over the whole object to be polished, thus achieving more uniform and precise polishing. Namely, the polyurethane mounting pad may have higher compressibility and compression recovery rate and excellent elasticity and mounting performance, and the like.

The method of preparing a polyurethane mounting pad according to one embodiment may comprise, after the step of wet-solidifying the resin composition comprising polyurethane resin and a DMF solvent, the step of immersing the wet-solidified product in an aqueous solution comprising an acid catalyst or a base catalyst.

As explained above, while the shape of the pores formed inside of the wet-solidified product of the polyurethane resin composition may be maintained in the immersion process, the urethane bonding or ester bonding part of the polyurethane resin is hydrolyzed or trans-esterified in the aqueous solution of the immersion step, thus decreasing the weight average molecular weight and hardness of the finally obtained polyurethane mounting pad.

The immersion solution of the immersion step comprises an acid catalyst or a base catalyst, and it may further comprise water, an alcohol aqueous solution or a glycerin aqueous solution, and the like. Specific examples of the alcohol aqueous solution may include an ethanol and an IPA aqueous solutions and the like, and the concentration of the alcohol may preferably 10% or less, because swelling may occur at the surface of the pad when the concentration of alcohol is high.

And, the acid catalyst or the base catalyst in the immersion solution may promote hydrolysis or trans-esterification of the ester bonding part or urethane bonding part of the soft segment of the polyurethane resin to decrease the weight average molecular weight and hardness of the polyurethane mounting pad within a short time.

And, the temperature of the aqueous solution comprising an acid catalyst or a base catalyst, i.e., the immersion solution, may be about 10 °C to 95 °C, preferably about 20 °C to 90 °C. If the temperature of the aqueous solution is too low, molecular weight may not be sufficiently decreased to a range where high compressibility may be realized, and thus, it may be difficult for the polyurethane mounting pad to have uniform pressure distribution or tension distribution, and when the polyurethane mounting pad is used, non-uniform polishing or defective products may be generated. And, if the temperature of the aqueous solution is too high, the polyurethane resin layer may be changed, and an adhesive layer and the like that can be additionally included may be volatilized or changed.

For the immersion solution, acid catalysts known to be usable in the immersion step of polymer may be used without specific limitations, and specific examples of the acid catalyst may include DBSA(dodecylbenzenesulfonic acid), SDS(sodium dodecylsulfate), HCl, BSA(benzenesulfonic acid), phosphoric acid, alkyl sulfonic acid, alkyl benzenesulfonic acid, butane sulfonic acid, nitric acid, succinic acid, a mixture thereof, or a salt thereof, wherein the alkyl means a C1-18 linear or branched alkyl group.

And, the acid catalyst may have 0.0001 to 3 molar concentrations, or a concentration of 1M or less. If the concentration of the acid catalyst is too low, it may not sufficiently promote the process of decreasing the molecular weight of the polyurethane resin, and thus, the reaction time may take too long, and if the concentration of the acid catalyst is too high, deformation may be generated on the surface of the finally produced mounting pad, and there may be a difficulty in washing of the mounting pad.

And, for the immersion solution, base catalysts known to be usable in the immersion step of polymer may be used without specific limitations, and specific examples thereof may include EDA(ethylene diamine), TMEDA(tetramethyl ethylenediamine), KOH, NaOH, NaHCO$_3$, Pyrolidine, Guanidine, Glycine, TMAH(tetramethylammonium hydroxide), TEAH(tetraethylammonium hydroxide), a mixture thereof or a salt thereof.

And, the base catalyst may have 0.0001 to 3 molar concentration. If the molar concentration of the base catalyst is less than 0.0001, it may not sufficiently promote a process of decreasing the molecular weight of the polyurethane resin, and thus, reaction time may take long, and if it is greater than 3 molar concentration, deformation may be generated on the surface of the finally produced mounting pad, and there may be a difficulty in washing of the mounting pad.

Particularly, in case a catalyst having excellent surface activity is used as the acid catalyst or the base catalyst included in the immersion solution, hydrolysis or trans-esterification of the urethane bonding or ester bonding part of the polyurethane resin may be promoted, thus decreasing the weight average molecular weight or hardness of the polyurethane mounting pad within a short time, and as the catalyst having excellent surface activity, DBSA(dodecylbenzenesulfonic acid), SDS(sodium dodecylsulfate), HCl, BSA(benzenesulfonic acid), phosphoric acid, and the like may be used.

And, the immersion step may be conducted for 1 minute to 24 hours, preferably 10 minutes to 15 hours.

The polyurethane resin may have weight average molecular weight of 220,000 to 1,000,000. If the polyurethane resin has weight average molecular weight less than 220,000, it may not properly form pores, and thus, it may be difficult to prepare a mounting pad having pores of a regular shape, and if the polyurethane resin has weight average molecular weight greater than 1,000,000, processibility may not be good in the mixing and coating steps due to high viscosity of the polyurethane resin, and it may take a long time to decrease the molecular weight of the resin to a desired range through the immersion process.

Meanwhile, after the immersion step, the weight average molecular weight of the polyurethane resin of the wet-solidified product may be decreased 10 to 80%. The decrement of the weight average molecular weight of the wet-solidified product increases with the elapse of time, and if it is immersed for 20 minutes, the weight average molecular weight may be decreased 20 to 50%, and if immersed for 3 hours, the weight average molecular weight may be decreased 30 to 80%.

Particularly, after the immersion step, the weight average molecular weight of the polyurethane resin may be 100,000 to 350,000. As explained above, while the shape and size of the pores are maintained in the immersion step, the weight average molecular weight of the solidified product of the polyurethane resin composition is decreased to lower the hardness of the finally obtained mounting pad, and the mounting pad may have higher compressibility and compression recovery rate and excellent elasticity and mounting performance and the like.

Inside of the polyurethane mounting pad provided according to one embodiment, pores having the longest diameter of 50 $\mu$m to 3 mm, preferably 300 $\mu$m to 2 mm may be formed. And, the pores distributed inside of the polyurethane mounting pad may have an aspect ratio of 3 to 10 (the ratio of length to width), preferably 4 to 9.

The polyurethane mounting pad may have a thickness of 0.3 to 3mm, preferably 0.5 to 2mm, and density of 0.10 to 0.50g/cm$^3$, preferably 0.15 to 0.30 g/cm$^3$.

And, the polyurethane mounting pad may have compressibility of 50% or more and compression recovery rate of 90% or more according to JIS L1021-16.

The polyurethane mounting pad may be distinguished from other common polyurethane sheets, for example, polyurethane polishing pad or polyurethane synthetic leather, and the like. Specifically, the polyurethane polishing pad should have high abrasion resistance and high hardness and should use cross linked polyurethane resin, and it is generally prepared by in situ mixing prepolymer and other monomers and reacting and solidifying them in a mold, instead of the wet-solidification process.

And, the method for preparing a polyurethane mounting pad may further comprise the steps of washing and drying a wet-solidified product; polishing the surface of a wet-solidified product; or forming and adhesive layer on the surface of a wet-solidified product, in addition to the steps of wet-solidifying a resin composition comprising polyurethane resin and a DMF solvent; and immersing the wet-solidified product in an aqueous solution of 40 to 200 °C comprising an acid catalyst or a base catalyst.

If the composition comprising polyurethane resin and an organic solvent such as a DMF solvent and the like is solidified in a solidification bath containing an organic solvent and water, phase separation of the components of the resin composition, for example, phase separation of polyurethane resin, water and an organic solvent occur, whereby polyurethane resin including a plurality of pores inside may be formed.

Specifically, the step of wet-solidifying the resin composition comprising polyurethane resin and a DMF solvent may comprise the steps of forming the polyurethane resin composition; coating or introducing the polyurethane resin composition on a substrate or in a mold to form a coating layer; and solidifying the coating layer.

And, after the step of wet-solidifying the polyurethane resin composition comprising polyurethane resin and a DMF solvent, the steps of washing, dehydrating and drying the solidified product of the resin composition may be continuously conducted. In the steps of washing, dehydrating and drying the solidified product of the resin composition, any methods and apparatuses known to be usable in the preparation of a mounting pad may be used without specific limitations.

The step of solidifying the coating layer may be conducted by introducing a substrate or mold on which the coating layer is formed into a solidification bath filled with a dimethylformamide aqueous solution or water. In the solidification process, as dimethylformamide in the polyurethane resin is replaced with water, the polyurethane resin is gradually solidified, and thereby, a plurality of pores may be formed. The concentration of the aqueous solution filled in the solidification bath and the amount of the aqueous solution or water are not specifically limited, and may be appropriately controlled according to the reaction conditions and the physical properties of the prepared mounting pad. After the solidification process, water and DMF may remain in the polishing pad, and the water, DMF solvent and other components may be removed in the polishing pad by washing the solidified product and drying it in an oven.

Meanwhile, the method of preparing a polyurethane mounting pad may further comprise a step of polishing (buffing) the surface of the wet-solidified product. The step of polishing is a process of peeling the polyurethane film having low hardness (100% modulus 1 to 10) using a roll wound with a sandpaper rotating at high speed, wherein high energy is applied.

In the polishing (or buffing) process, a film to be polished may be peeled hundreds of um at a time, or peeled tens of um several times. If a film having low hardness is polished a lot at a time, thickness difference or difference in polishing(buffing) level may be generated to the MD (machine direction), and the energy non-uniformly stacked on the mounting pad may be non-uniformly transcribed from the polishing apparatus to a film to be polished, for example, a glass substrate of a display and the like, thus generating lines or stripes in the TD (Transverse Direction).

The method of preparing a polyurethane mounting pad may further comprise a step of forming an adhesive layer on the surface of the buffed wet-solidified product. The adhesive layer may be formed using any methods and constructions known to be used in the preparation of the final product of a mounting pad. For example, the adhesive layer may be formed by coating adhesive, for example pressure sensitive adhesive(PSA) and the like, on the surface of the wet-solidified product or on the surface of the surface-polished wet-solidified surface, or it may be formed by laminating a pressure sensitive double-sided adhesive film on the surface of the wet-solidified product or on the surface of the surface-polished wet-solidified product.

Meanwhile, the sequence of the immersion step may not be specifically limited. For example, it may be conducted after the step of wet-solidifying a polyurethane resin composition, washing the wet-solidified product of the polyurethane resin composition, polishing the surface, or forming and adhesive layer, but it is preferable that the wet-solidified resin composition is washed and immersed, so as to decrease the weight average molecular weight of the polyurethane resin without deformation of the shape of the already formed pores.

And, the polyurethane resin may have viscosity of 100,000 to 1,000,000 cps at a 30% DMF solution state. In the preparation process of the polyurethane mounting pad, dimethyl formamide in the polyurethane resin is dissolved in water and gets out to form pores, and if the polyurethane resin having a molecular weight or viscosity of the above range is used, a plurality of pores may be formed with uniform size and distribution. If the viscosity of the polyurethane resin is less than 100,000cps, it may not have appropriate physical properties as a mounting pad, thus rendering it difficult to prepare a mounting pad, and if the viscosity is greater than 1,000,000cps, it may be difficult to form pores inside of the mounting pad, and the hardness of the mounting pad may be significantly increased.

The resin composition may comprise 1 to 70 wt%, preferably 3 to 50 wt% of the polyurethane resin. If the content of the polyurethane resin is too small in the resin composition, it may be difficult to appropriately form the body of a mounting pad, and the viscosity of the composition may be too lowered, and thus, the composition may not be easily applied for a coating process for the preparation of a mounting pad. And, if the content of the polyurethane resin is too large in the resin composition, the density of the obtained polyurethane mounting pad may become unnecessarily large, or the viscosity of the composition may become too large, and thus, the composition may not be easily applied for a coating process for the preparation of a mounting pad.

The resin composition may comprise a dimethylformamide(DMF) solvent, wherein the dimethylformamide(DMF) means N,N'-dimethylmethanamide. If the polyurethane resin composition is solidified, a polyurethane mounting pad having pores inside may be formed by phase separation of the components of the resin composition, for example, polyurethane resin, water and DMF solvent. Namely, in the process of solidifying the resin composition, the DMF solvent existing in the polyurethane resin is replaced with water in a solidification bath, and after the solidification is completed, a polyurethane resin for a mounting pad having pores inside may be formed.

The resin composition may comprise 30 to 99wt%, preferably 40 to 90wt% of the DMF solvent. If the content of the DMF solvent is too low in the resin composition, the formation of pores inside of the resin may not be smooth, and if the content is too high, the ratio of the polyurethane resin may be significantly decreased, thus rendering it difficult to prepare a polyurethane mounting pad having appropriate physical properties.

And, the resin composition may further comprise anionic surfactant. The anionic surfactant may allow water to be uniformly penetrated over the whole area of the composition to be solidified, and thus, phase separation of each component of the polyurethane resin composition may not be concentrated to a specific part, thus uniformly forming pores inside of the mounting pad. The content of the anionic surfactant may be appropriately controlled considering the physical properties of the prepared mounting pad or process conditions, and the like, and for example, it may be included in the content of 0.01 to 5 wt% in the polyurethane resin composition for a mounting pad. The examples of the anionic surfactant may include dodecylbenzenesulfuonic acid, dodecylbenznesulfonic acid derivatives, succinic acid, succinic acid derivatives, dodecylsulfate, dodecylsulfate derivatives, or a mixture thereof. And, it is preferable to use dodecylbenzenesulfonic acid or derivatives thereof and succinic acid or derivative thereof in combination as the anionic surfactant, so as to appropriately control the shape or size of the pores formed inside of the mounting pad and to improve the physical properties of the prepared mounting pad.

The resin composition may further comprise non-ionic surfactant so as to planarizing the surface of the pad or to increase absorption of the mounting pad. Examples of the non-ionic surfactant may include silicon polymer, silicon oil, glycerol polymer or hydrocarbon polymer and the like. The content of the non-ionic surfactant may be appropriately controlled considering the physical properties of the prepared mounting pad or process conditions and the like, and for example, it may be included in the content of 0.01 to 5 wt% in the polyurethane resin composition for a mounting pad.

And, the resin composition may further comprise at least one additive selected from the group consisting of a coloring agent, a water repellent, filler, a pore size regulator, and a pigment. The content of the additives may be appropriately controlled considering the physical properties of the prepared mounting pad or process conditions, and the like, and for example, each additive may be included in the content of 0.01 to 10 wt% in the resin composition.

The polyurethane mounting pad prepared by the above explained method includes long and large pores uniformly formed inside, and thus, the hardness of the pad is decreased and high compressibility and compression recovery rate may be realized, and a phenomenon wherein the thickness of the pad becomes locally non-uniform or pressure or tension is concentrated on a part of the mounting pad may be overcome, thus affording more uniform thickness, pressure distribution or tension distribution.

[ADVANTAGEOUS EFFECTS]

According to the present invention, provided is a method for easily and rapidly preparing a polyurethane mounting pad that may exhibit more uniform thickness, pressure distribution or tension distribution over the whole area of the prepared pad, and may realize more uniform and high efficiency polishing.

[BRIEF DESCRIPTION OF DRAWINGS]

Fig. 1 shows the cross sectional SEM photograph of the mounting pad of Example prepared using polyurethane having molecular weight of 380,000.
Fig. 2 shows the cross sectional SEM photograph of the mounting pad of Comparative Example 2 prepared using polyurethane having molecular weight of 210,000.

[DETAILED DESCRIPTION OF THE EMBODIMENTS]

The present invention will be explained in detail with reference to the following Examples. However, these Examples are only to illustrate the invention, and the scope of the invention is not limited thereto.

**<Example 1: Synthesis of polyurethane mounting pad and measurement of compressibility thereof>**

The resin composition comprising the components of the following Table 1 was coated on a PET film, and then, the coating layer was wet-solidified, washed, dehydrated and dried to obtain a polyurethane resin film layer including pores inside. The obtained polyurethane resin film layer was buffed using a roll wound with a sandpaper rotating at high speed so as to have more uniform thickness and high uniformity, and a pressure sensitive double-sided adhesive tape was laminated on one side of the buffed polyurethane resin film layer to obtain a polyurethane mounting pad.

And, the mounting pad was immersed in a 0.1 M DBSA aqueous solution of 50 °C for 3 hours, washed, dehydrated and dried to prepare a finished product of polyurethane mounting pad.

[Polyurethane layer: 1200 $\mu$m, adhesive layer: 250 $\mu$m]

The compressibility and the final weight average molecular weight of the prepared polyurethane mounting pad according to immersion time are described in Table 2.

[Table 1]

| Components (parts by weight) | Polyurethane resin (SW-80LM) 380,000 | Non-ionic surfactant SD-7 | SD-11 | Coloring agent | DMF | Water repellent | Filler | PEG |
|---|---|---|---|---|---|---|---|---|
| Example 1 | 150 | 2 | 4 | 6 | 15 | 2 | 1 | 2 |
| * polyurethane resin SW-80LM: a solution of 20 wt% of polyurethane resin in DMF | | | | | | | | |

**<Example 2: Synthesis of polyurethane mounting pad and measurement of compressibility thereof>**

A polyurethane mounting pad was obtained by the same method as Example 1, except that the pad was immersed in a mixture of 0.1M SDS and 0.1M HCl of 50 °C instead of 0.1M DBSA of 50 °C .

[polyurethane layer: 1200$\mu$m, adhesive layer: 250$\mu$m]

The compressibility and final weight average molecular weight of the prepared polyurethane mounting pad according to immersion time are shown in the following Table 2.

**<Example 3: Synthesis of polyurethane mounting pad and measurement of compressibility thereof>**

A polyurethane mounting pad was obtained by the same method as Example 1, except that the pad was immersed in a 0.5M BSA aqueous solution of 50 °C instead of 0.1M DBSA of 50 °C.

[polyurethane layer: 1200$\mu$m, adhesive layer: 250$\mu$m]

The compressibility and final weight average molecular weight of the prepared polyurethane mounting pad according to immersion time are shown in the following Table 2.

**<Example 4: Synthesis of polyurethane mounting pad and measurement of compressibility thereof>**

A polyurethane mounting pad was obtained by the same method as Example 1, except that the pad was immersed in a 0.001M DBSA aqueous solution of 25 °C instead of 0.1M DBSA of 50 °C.

[polyurethane layer: 1200$\mu$m, adhesive layer: 250$\mu$m]

The compressibility and final weight average molecular weight of the prepared polyurethane mounting pad according to immersion time are shown in the following Table 2.

**<Example 5: Synthesis of polyurethane mounting pad and measurement of compressibility thereof>**

A polyurethane mounting pad was obtained by the same method as Example 1, except that the pad was immersed in a 0.001M DBSA aqueous solution of 70 °C instead of 0.1M DBSA of 50 °C.

[polyurethane layer: 1200$\mu$m, adhesive layer: 250$\mu$m]

The compressibility and final weight average molecular weight of the prepared polyurethane mounting pad according to immersion time are shown in the following Table 2.

**<Example 6: Synthesis of polyurethane mounting pad and measurement of compressibility thereof>**

A polyurethane mounting pad was obtained by the same method as Example 1, except that the pad was immersed in a 2M EDA aqueous solution of 50 °C instead of 0.1M DBSA of 50 °C.

[polyurethane layer: 1200$\mu$m, adhesive layer: 250$\mu$m]

The compressibility and final weight average molecular weight of the prepared polyurethane mounting pad according to immersion time are shown in the following Table 2.

**<Example 7: Synthesis of polyurethane mounting pad and measurement of compressibility thereof>**

A polyurethane mounting pad was obtained by the same method as Example 1, except that the pad was immersed in a 2M EDA aqueous solution of 70 °C instead of 0.1M DBSA of 50 °C.

[polyurethane layer: 1200$\mu$m, adhesive layer: 250$\mu$m]

The compressibility and final weight average molecular weight of the prepared polyurethane mounting pad according to immersion time are shown in the following Table 2.

**<Comparative Example 1: Synthesis of polyurethane mounting pad and measurement of compressibility thereof>**

A polyurethane mounting pad was obtained by the same method as Example 1, except that the pad was aged in an oven of 50 °C instead of immersion.

[polyurethane layer: 1200$\mu$m, adhesive layer: 250$\mu$m]

The compressibility and final weight average molecular weight of the prepared polyurethane mounting pad according to immersion time are shown in the following Table 2.

**<Comparative Example 2: Synthesis of polyurethane mounting pad and measurement of compressibility thereof>**

A polyurethane mounting pad was obtained by the same method as Example 1, except using polyurethane resin having molecular weight of 210,000 without immersion.

[polyurethane layer: 1200$\mu$m, adhesive layer: 250$\mu$m]

The compressibility and final weight average molecular weight of the prepared polyurethane mounting pad according to immersion time are shown in the following Table 2.

[Table 2]

|  | Immersion time | Weight average molecular weight | Compressibility (%) | Compression recovery rate(%) |
|---|---|---|---|---|
| Example 1 | 0 | 380,000 | 50 | 97 |
|  | 20 minutes | 266,000 | 56 | 97 |
|  | 1 hour | 198,000 | 57 | 96 |
|  | 3 hours | 183,000 | 58 | 93 |
| Example 2 | 0 | 380,000 | 48 | 95 |
|  | 20 minutes | 311,000 | 52 | 95 |
|  | 1 hour | 262,000 | 53 | 95 |
|  | 3 hours | 244,000 | 55 | 95 |
| Example 3 | 0 | 380,000 | 47 | 95 |
|  | 20 minutes | 312,000 | 51 | 95 |
|  | 1 hour | 238,000 | 54 | 95 |
|  | 3 hours | 168,000 | 57 | 95 |
| Example 4 | 0 | 380,000 | 50 | 95 |
|  | 3 hours | 280,000 | 53 | 95 |
|  | 14 hours | 220,000 | 56 | 95 |
| Example 5 | 0 | 380,000 | 50 | 94 |
|  | 3 hours | 175,000 | 58 | 93 |
| Example 6 | 0 | 380,000 | 50 | 95 |
|  | 3 hours | 215,000 | 55 | 94 |
|  | 14 hours | 160,000 | 60 | 93 |

(continued)

| | Immersion time | Weight average molecular weight | Compressibility (%) | Compression recovery rate(%) |
|---|---|---|---|---|
| Example 7 | 0 | 380,000 | 50 | 95 |
| | 3 hours | 143,000 | 60 | 91 |
| Comparative Example 1 | 0 | 380,000 | 47 | 89 |
| | 2 days | 371,000 | 49 | 94 |
| | 6 days | 358,000 | 48 | 93 |
| | 16 days | 330,000 | 48 | 93 |
| | 22 days | 313,000 | 49 | 93 |
| Comparative Example 2 | 0 day | 210,000 | 12 | 89 |

**<Experimental Example 1: Measurement of compressibility and compression recovery rate>**

The compressibilities of the polyurethane mounting pads obtained in Examples and Comparative Examples were measured according to JIS L1021-16. Specifically, the polyurethane mounting pads obtained in Examples and Comparative Examples were cut to prepare specimens of 25mm*30mm size. To the specimen, the initial load of $100g/cm^2$ was applied for 30 seconds, and the initial thickness was measured using a dial gauge (T0). To the specimen, the load of $1120g/cm^2$ was applied for 5 minutes, and the thickness was measured under pressure (T1). And, the load was completely removed, the specimen was allowed to stand for 5 minutes, and the initial load of $100 g/cm^2$ was applied again for 30 seconds, and then, the thickness was measured (T0'). Each measured thickness was applied to the following Formula to calculate compressibility and compression recovery rate.

$$\text{Compressibility } (\%)=(TO-T1)*100/T0$$

$$\text{Compression recovery rate}(\%)=(TO'-T1)*100/(T0-T1)$$

**<Comparison of Examples and Comparative Examples>**

As shown in Table 2, the polyurethane mounting pads of Examples 1 to 7 tend to exhibit increasing compressibility with the elapse of immersion time, and the mounting pads prepared using polyurethane having weight average molecular weight of 380,000 exhibit the final weight average molecular weight of 183,000 (Example 1), 244,000 (Example 2), and 168,000 (Example 3), and thus, it was confirmed that the molecular weight can be sufficiently decreased through the immersion process. And, all the polyurethane mounting pads of Examples exhibit high compressibility of 55% or more, and thus, it appear that they can precisely polish a glass substrate, which is a film to be polished, with high efficiency, at practical polishing.

Particularly, the results of Examples 1 to 7 are obtained through the short immersion process of about 3 hours, and it was confirmed that even by immersion for a short time, molecular weight can be decreased to improve physical properties, and compressibility can be increased, and thus, a mounting pad can be efficiently and easily prepared.

To the contrary, the mounting pad of Comparative Example 1, which was prepared by the same method as Example except that the pad was aged at the same temperature as Example instead of the immersion step, exhibits low compressibility and insignificant molecular weight change, thus confirming the effects of the immersion step for the improvement in compressibility and change in molecular weight. Namely, when the mounting pad was aged at the same temperature as Example without immersion, there was no significant change in molecular weight and compressibility, and thus, it was confirmed that increase in compressibility is the effect caused by the immersion step rather than high temperature or aging.

Meanwhile, in Comparative Example 2 wherein a mounting pad was prepared using polyurethane resin having low molecular weight of 210,000 as starting material, although the molecular weight of the mounting pad was not further decreased because an immersion process was not conducted, the mounting pad can exhibit equivalent level of density and hardness to Examples because the molecular weight of the starting material are equivalent to that of the final molecular weight of Examples. Nevertheless, the mounting pads of Examples exhibit remarkably higher compressibility and compression recovery rate compared to the mounting pad of Comparative Example 2, and thus, it is confirmed that according to the preparation method of Examples, pores can be properly formed inside of the mounting pad, and the shape and distribution of the pores are uniformly exhibited, thereby achieving the above explained effects.

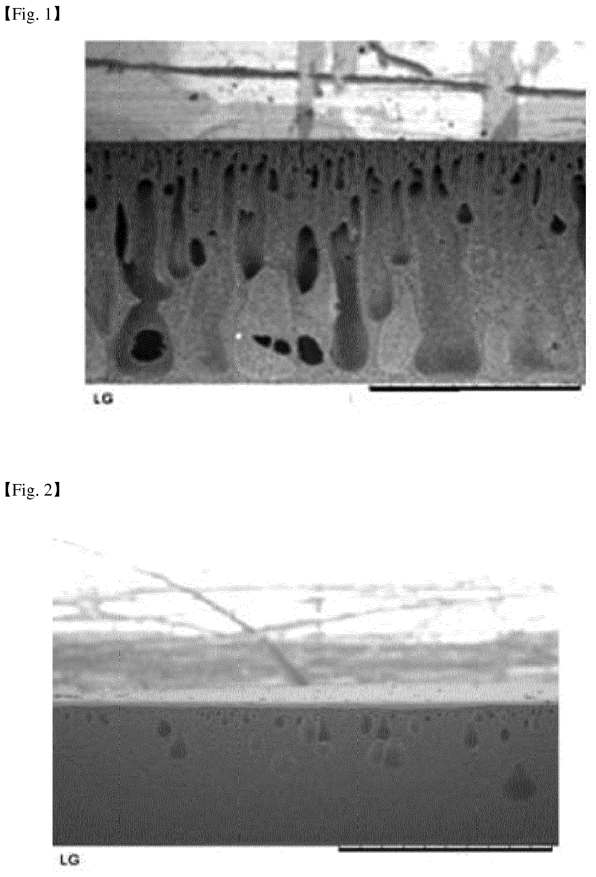

In addition, as shown in Fig.1 and Fig. 2, the polyurethane mounting pad of Example 1 using polyurethane of high molecular weight exhibits a cross sectional shape including long and uniformly distributed pores, thus confirming remarkably improved pore shape compared to the cross sectional shape of Comparative Example 2.

## Claims

1. A method for preparing a polyurethane mounting pad comprising the steps of:

   wet-solidifying a resin composition comprising polyurethane resin and a DMF solvent; and
   immersing the wet-solidified product in an aqueous solution comprising an acid catalyst or a base catalyst.

2. The method according to claim 1, wherein the temperature of the aqueous solution comprising an acid catalyst or a base catalyst is 10 °C to 95 °C.

3. The method according to claim 1, wherein the acid catalyst has a concentration of 1M or less.

4. The method according to claim 1, wherein the base catalyst has 0.001 to 3 molar concentration

5. The method according to claim 1, wherein the acid catalyst includes at least one selected from the group consisting of DBSA(dodecylbenzenesulfonic acid), SDS(sodium dodecylsulfate), HCl, BSA(benzenesulfonic acid), phosphoric acid, butane sulfonic acid, alkyl sulfonic acid, alkyl benzenesulfonic acid, nitric acid and succinic acid.

6. The method according to claim 1, wherein the base catalyst includes at least one selected from the group consisting of EDA(ethylene diamine), TMEDA(tetramethyl ethylenediamine), KOH, NaOH, NaHCO$_3$, pyrolidine, guanidine, glycine, TMAH(tetramethylammonium hydroxide) and TEAH(tetraethylammonium hydroxide).

7. The method according to claim 1, wherein the step of immersing the wet-solidified product is conducted for 1 minute to 24 hours.

8. The method according to claim 1, wherein the weight average molecular weight of the polyurethane resin is 250,000 to 1,000,000.

9. The method according to claim 1, wherein the weight average molecular weight of the polyurethane resin is decreased 10 to 80% after the immersion step.

10. The method according to claim 1, wherein the weight average molecular weight of the polyurethane resin is 100,000 to 350,000 after the immersion step.

11. The method according to claim 1, wherein pores having the longest diameter of 50$\mu$m to 4 mm and an aspect ratio of 3 to 10 are formed inside of the polyurethane mounting pad.

12. The method according to claim 1, wherein the prepared polyurethane mounting pad has compressibility of 50% or more and compression recovery rate of 90% or more according to JIS L1021-16.

13. The method according to claim 1, further comprising the steps of
    washing and drying the wet-solidified product;
    polishing the surface of the wet-solidified product; or
    forming an adhesive layer on the surface of the wet-solidified product.

14. The method according to claim 1, wherein the polyurethane resin has viscosity of 10,000 to 1,000,000 cps in a 30% DMF solution state of room temperature.

15. The method according to claim 1, wherein the resin composition further comprises at least one surfactant selected from the group consisting of anionic surfactant and non-ionic surfactant.

16. The method according to claim 15, wherein the anionic surfactant includes at least one compound selected from the group consisting of dodecylbenzenesulfonic acid, dodecylbenzenesulfonic acid derivatives, succinic acid, succinic acid derivatives, dodecylsulfate and dodecylsulfate derivatives.

17. The method according to claim 15, wherein the anionic surfactant includes a mixture of dodecylbenzenesulfonic acid or a derivatives thereof; and succinic acid or a derivative thereof.

18. The method according to claim 15, wherein the non-ionic surfactant includes at least one compound selected from the group consisting of silicon-based polymer, silicon oil, glycerol-based polymer and hydrocarbon-based polymer.

19. The method according to claim 15, wherein the resin composition comprises:

1 to 70 wt% of the polyurethane resin;
30 to 99 wt% of the DMF solvent; and
remaining amount of the at least one surfactant selected from the group consisting of anionic surfactant and non-ionic surfactant.


**Patentansprüche**

1. Verfahren zum Herstellen eines Polyurethanträgerkissens, umfassend die Schritte:

Nass-Verfestigen einer Harzzusammensetzung umfassend Polyurethanharz und ein DMF-Lösungsmittel; und
Eintauchen des nass-verfestigten Produkts in einer wässrigen Lösung umfassend einen sauren Katalysator oder einen basischen Katalysator.

2. Verfahren nach Anspruch 1, wobei die Temperatur der wässrigen Lösung, die einen sauren Katalysator oder einen basischen Katalysator umfasst, 10°C bis 95°C ist.

3. Verfahren nach Anspruch 1, wobei der saure Katalysator eine Konzentration von 1 M oder weniger aufweist.

4. Verfahren nach Anspruch 1, wobei der basische Katalysator eine 0,001- bis 3-molare Konzentration aufweist.

5. Verfahren nach Anspruch 1, wobei der saure Katalysator wenigstens einen einschließt ausgewählt aus der Gruppe bestehend aus DBSA (Dodecylbenzolsulfonsäure), SDS (Natriumdodecylsulfat), HCl, BSA (Benzolsulfonsäure), Phosphorsäure, Butansulfonsäure, Alkylsulfonsäure, Alkylbenzolsulfonsäure, Salpetersäure und Bernsteinsäure.

6. Verfahren nach Anspruch 1, wobei der basische Katalysator wenigstens einen einschließt ausgewählt aus der Gruppe bestehend aus EDA (Ethylendiamin), TMEDA (Tetramethylethylendiamin), KOH, NaOH, $NaHCO_3$, Pyrolidin, Guanidin, Glycin, TMAH (Tetramethylammoniumhydroxid) und TEAH (Tetraethylammoniumhydroxid).

7. Verfahren nach Anspruch 1, wobei der Schritt eines Eintauchens des nass-verfestigten Produkts für 1 Minute bis 24 Stunden durchgeführt wird.

8. Verfahren nach Anspruch 1, wobei das Gewichtsmittelmolekulargewicht des Polyurethanharzes 250.000 bis 1.000.000 ist.

9. Verfahren nach Anspruch 1, wobei das Gewichtsmittelmolekulargewicht des Polyurethanharzes um 10 bis 80% nach dem Eintauchschritt vermindert ist.

10. Verfahren nach Anspruch 1, wobei das Gewichtsmittelmolekulargewicht des Polyurethanharzes 100.000 bis 350.000 nach dem Eintauchschritt ist.

11. Verfahren nach Anspruch 1, wobei Poren mit dem längsten Durchmesser von 50 μm bis 4 μm und einem Aspektverhältnis von 3 bis 10 innerhalb des Polyurethanträgerkissens gebildet werden.

12. Verfahren nach Anspruch 1, wobei das hergestellte Polyurethanträgerkissen eine Kompressibilität von 50% oder mehr und eine Kompressionserholungsrate von 90% oder mehr gemäß JIS L1021-16 aufweist.

13. Verfahren nach Anspruch 1, weiter umfassend die Schritte:

Waschen und Trocknen des nass-verfestigten Produkts;
Polieren der Oberfläche des nass-verfestigten Produkts; oder
Bilden einer Klebstoffschicht auf der Oberfläche des nass-verfestigten Produkts.

14. Verfahren nach Anspruch 1, wobei das Polyurethanharz eine Viskosität von 10.000 bis 1.000.000 cps in einer 30%igen DMF-Lösung, bei Raumtemperaturzustand, aufweist.

15. Verfahren nach Anspruch 1, wobei die Harzzusammensetzung ferner wenigstes ein Tensid ausgewählt aus der Gruppe bestehend aus anionischem Tensid und nicht-ionischem Tensid umfasst.

16. Verfahren nach Anspruch 15, wobei das anionische Tensid wenigstens eine Verbindung einschließt ausgewählt aus der Gruppe bestehend aus Dodecylbenzolsulfonsäure, Dodecylbenzolsulfonsäurederivaten, Bernsteinsäure, Bernsteinsäurederivaten, Dodecylsulfat und Dodecylsulfatderivaten.

17. Verfahren nach Anspruch 15, wobei das anionische Tensid eine Mischung aus Dodecylbenzolsulfonsäure oder einem Derivat derselben; und Bernsteinsäure oder einem Derivat derselben einschließt.

18. Verfahren nach Anspruch 15, wobei das nicht-ionische Tensid wenigstens eine Verbindung einschließt ausgewählt aus der Gruppe bestehend aus Polymer auf Siliconbasis, Siliconöl, Polymer auf Glycerolbasis und Polymer auf Kohlenwasserstoffbasis.

19. Verfahren nach Anspruch 15, wobei die Harzzusammensetzung umfasst:

1 bis 70 Gew.-% des Polyurethanharzes;
30 bis 99 Gew.-% des DMF-Lösungsmittels; und
einen restlichen Gehalt des wenigstens einen Tensids ausgewählt aus der Gruppe bestehend aus anionischem Tensid und nicht-ionischem Tensid.

## Revendications

1. Procédé de préparation d'un patin de support en polyuréthane comprenant les étapes consistant à :

solidifier à l'état humide une composition de résine comprenant de la résine de polyuréthane et un solvant de DMF ;
et
immerger le produit solidifié à l'état humide dans une solution aqueuse comprenant un catalyseur acide ou un catalyseur basique.

2. Procédé selon la revendication 1, dans lequel la température de la solution aqueuse comprenant un catalyseur acide ou un catalyseur basique est de 10 °C à 95 °C.

3. Procédé selon la revendication 1, dans lequel le catalyseur basique a une concentration de 1M ou inférieure.

4. Procédé selon la revendication 1, dans lequel le catalyseur basique a une concentration de 0,001 à 3 équivalents molaires.

5. Procédé selon la revendication 1, dans lequel le catalyseur acide renferme au moins un constituant sélectionné dans le groupe constitué de DBSA (acide dodécylbenzènesulfonique), SDS (dodécylsulfate de sodium), HCl, BSA (acide benzènesulfonique), acide phosphorique, acide sulfonique de butane, acide sulfonique d'alkyle, acide benzènesulfonique d'alkyle, acide nitrique et acide succinique.

6. Procédé selon la revendication 1, dans lequel le catalyseur de base renferme au moins un constituant sélectionné dans le groupe constitué de EDA (éthylèle diamine), de TMEDA (tétraméthyléthylènediamine), de KOH, de NaOH, de NaHCO$_3$, de pyrolidine, de guadinine, de glycine, de TMAH (hydroxyde de tétraméthylammonium) et de TEAH (hydroxyde de tétraéthylammonium).

7. Procédé selon la revendication 1, dans lequel l'étape d'immersion du produit solidifié à l'état humide est effectuée pendant 1 minute à 24 heures.

8. Procédé selon la revendication 1, dans lequel le poids moléculaire moyen en poids de la résine de polyuréthane est de 250.000 à 1.000.000.

9. Procédé selon la revendication 1, dans lequel le poids moléculaire moyen de la résine de polyuréthane est réduit de 10 à 80 % après l'étape d'immersion.

10. Procédé selon la revendication 1, dans lequel le poids moléculaire moyen en poids de la résine de polyuréthane est de 100.000 à 350.000 après l'étape d'immersion.

11. Procédé selon la revendication 1, dans lequel des pores ayant le diamètre le plus long de l'ordre de 50 $\mu$m à 4 mm et un rapport d'aspect de 3 à 10 sont formés à l'intérieur du patin de support en polyuréthane.

12. Procédé selon la revendication 1, dans lequel le patin de support en polyuréthane préparé a une compressibilité de 50 % ou plus et un taux de reprise de compression de 90 % ou plus selon JIS L1021-16.

13. Procédé selon la revendication 1, comprenant en outre les étapes consistant à
laver et sécher un produit solidifié à l'état humide ;
polir la surface du produit solidifié à l'état humide ; ou
former une couche adhésive sur la surface du produit solidifié à l'état humide.

14. Procédé selon la revendication 1, dans lequel la résine de polyuréthane a une viscosité de 10.000 à 1.000.000 cps dans 30 % de DMF à l'état de solution à la température ambiante.

15. Procédé selon la revendication 1, dans lequel la composition de résine comprend en outre au moins un agent tensio-actif sélectionné dans le groupe constitué d'un agent tensio-actif anionique et d'un agent tensio-actif non anionique.

16. Procédé selon la revendication 15, dans lequel l'agent tensio-actif anionique renferme au moins un composé sélectionné dans le groupe constitué d'acide de dodécylbenzènesulfonique, de dérivés de l'acide dodécylbenzènesulfonique, d'acide succinique, de dérivés de l'acide succinique, de dodécylsulfate et de dérivés du dodécylsulfate.

17. Procédé selon la revendication 15, dans lequel l'agent tensio-actif anionique renferme un mélange d'acide de dodécylbenzènesulfonique ou de dérivés de celui-ci ; et de l'acide succinique ou d'un dérivé de celui-ci.

18. Procédé selon la revendication 15, dans lequel l'agent tensio-actif non anionique renferme au moins un composé sélectionné dans le groupe constitué de polymère à base de silicium, d'huile de silicium, de polymère à base de glycérol et de polymère à base d'hydrocarbure.

19. Procédé selon la revendication 15, dans lequel la composition de résine comprend :

1 à 70 % en poids de résine de polyuréthane ;
30 à 99 % en poids du solvant DMF ; et
un montant résiduel dudit au moins un agent tensio-actif sélectionné dans le groupe constitué d'un agent tensio-actif anionique et d'un agent tensio-actif non anionique.

【Fig. 1】

【Fig. 2】